(19)

**Europäisches Patentamt**
**European Patent Office**
**Office européen des brevets**

(11) **EP 4 481 639 A2**

(12) **EUROPEAN PATENT APPLICATION**

(43) Date of publication:
**25.12.2024 Bulletin 2024/52**

(21) Application number: **24184088.3**

(22) Date of filing: **24.06.2024**

(51) International Patent Classification (IPC):
**G06N 20/00** *(2019.01)* **G06Q 20/40** *(2012.01)*

(52) Cooperative Patent Classification (CPC):
**G06N 20/00; G06Q 20/4016**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.06.2023 PT 2023118745**

(71) Applicant: **Feedzai - Consultadoria e Inovação Tecnológica, S.A.**
**3030-199 Coimbra (PT)**

(72) Inventors:
• **NASER EDDIN, Ahmad**
 **3030-199 Coimbra (PT)**
• **BONO, Jacopo**
 **3030-199 Coimbra (PT)**
• **COLAÇO FERREIRA, Hugo Ricardo**
 **3030-199 Coimbra (PT)**
• **BARRIGA NEGRA ASCENSÃO, João Tiago**
 **3030-199 Coimbra (PT)**
• **SANTOS RODRIGUES BIZARRO, Pedro Gustavo**
 **3030-199 Coimbra (PT)**

(74) Representative: **Patentree**
**Edificio Net**
**Rua de Salazares, 842**
**4149-002 Porto (PT)**

(54) **METHOD AND SYSTEM FOR LOW-LATENCY FEATURE EXTRACTION ON CONTINUOUS-TIME DYNAMIC GRAPHS**

(57) The disclosure relates to a method and system for low-latency feature extraction on continuous-time dynamic graphs ("CTDG"), in particular for training a machine-learning model. The disclosure includes feature extraction using a CTDG from a stream of transaction data, wherein each transaction is carried between a first node and a second node among a plurality of nodes, for obtaining a feature histogram for each node, each feature histogram comprising a plurality of histogram bins for one or more features, each bin comprising a count of data values falling within each bin. The method includes obtaining a first weighted average histogram from the feature histogram of the first node using a first discount factor; and obtaining a second weighted average histogram, from the feature histogram of the second node using a second discount factor. The disclosure also includes using a hashed representation of the histogram bins of the feature histogram.

EP 4 481 639 A2

Description

TECHNICAL FIELD

The present disclosure relates to a method and system for low-latency feature extraction on continuous-time dynamic graphs, in particular for training a machine-learning model.

BACKGROUND

Many real-world datasets have an underlying graph structure. In other words, they are characterized not only by their individual data points but also by the relationships between them. Moreover, they are typically dynamic in nature, meaning that the entities and their interactions change over time. Machine learning models should consider these dynamics in order to harness their full potential in downstream tasks. Examples of such systems are social networks, financial datasets, and biological systems [3, 20, 29]. Dealing with dynamic graphs is technically more challenging compared to static graphs, especially if the graphs evolve in continuous time (also known as continuous-time dynamic graphs or CTDGs). The majority of machine learning models on graph datasets are based on graph neural networks (GNNs), achieving state-of-the-art performance [25]. A few deep neural network architectures emerged to deal with CTDGs in the past years [7, 8, 11, 12, 16, 19, 26]. One drawback of these approaches is that one either needs to sample k-hop neighbourhoods to compute the embeddings (e.g. [16]) or perform random-walks (e.g. [11]). Both cases are computationally costly, resulting in high inference latencies.

The random-walk based feature extraction method to generate a node embedding for a seed node comprises the steps: selecting a seed node, performing random walks, and summarizing collected data.

Select the seed node - depending on the use-case, and for CTDGs typically one considers entities involved in new activity, for instance if the change on the graph is adding a new edge between two nodes, then each of these two nodes could be a candidate for a seed node.

Perform random-walks starting from the seed nodes - during the random-walks, relevant data such as node or edge features of the traversed path are collected. The type of random-walks influences what neighborhood is summarized in the extracted features. Walks can be (un)directed, biased, and/or temporal.

Summarize collected data - the data collected over walks is aggregated into a fixed set of features, characterizing each seed node's neighborhood. Examples of such aggregations are the average of encountered numerical node or edge features, the maximum of encountered out-degree, etc.

The computation of these features is costly, because multiple random-walks need to be generated for each seed node. For CTDGs, one would have to compute such features each time an edge arrives. This is infeasible for high-frequency use-cases such as fraud detection in financial transactions, where a decision about a transaction needs to be made in a few milliseconds.

DeepWalk [15] and node2vec [6] are two high-latency random-walk based methods to extract node embeddings on static graphs. The main limiting factors of these methods are that they disregard node and edge features as well as temporal information, since they are designed for static graphs. Sajjad et al. [17] extend these random-walk based methods to discrete-time dynamic graphs. While some efficiency is gained with the proposed method, it is far from applicable to CTDGs and in low-latency settings. Node2bits [8] considers the temporal information by defining several time windows over the sampled random-walks, and aggregates node attributes in these time windows into histograms. Node2bits does not include edge-features and performs costly computations which cannot be performed with low latency.

Continuous-time Dynamic Node Embeddings (CTDNE) [13, 14] were proposed to generate time-aware embeddings, generalizing the node2vec framework to CTDGs. The authors consider the graph as a stream of edges, and propose to perform temporal walks starting from seed nodes chosen from a temporally biased distribution. Similarly, temporal random-walks have been used to extract embeddings into hyperbolic spaces [21]. Causal anonymous walks [23] propose to use anonymized walks in order to encode motif information. Similarly, NeurTWs [11] explicitly model time in the anonymous walks using Neural Ordinary Differantial Equations (NeuralODEs). Herein full random-walks need to be performed.

Most GNN-based methods require a K-hop neighbourhood on which message-passing operations lead to node embeddings. To deal with CTDGs, a simple approach is to consider a series of discrete snapshots of the graph over time, on which static methods are applied. Such approaches however do not take time properly into account and several works propose techniques to alleviate this issue [5, 10, 18, 28]. To better deal with CTDGs, other works focus on including time-aware features or inductive biases into the architecture. DeepCoevolve [2] and Jodie [12] train two RNNs for bipartite graphs, one for each node type. Importantly, the previous hidden state of one RNN is also added as an input to the other RNN. In this way, the two RNNs interact, in essence performing single-hop graph aggregations. TGAT [26] proposes to include temporal information in the form of time encodings, while TGN [16] extends this framework and also includes a memory module taking the form of a recurrent neural network. In [9], the authors replace the discrete-time recurrent network of TGN with a NeuralODE modelling the continuous dynamics of node embeddings.

APAN [22] proposes to reduce the latency at inference time by decoupling the more costly graph operations from the inference module. The authors propose a more light-weight inference module that computes the predictions based on a node's embedding as well as a node's mailbox, which contains messages of recently interacting nodes. The mailbox is updated asynchronously, i.e. separated from the inference module, and involves the more expensive k-hop message passing. While APAN improves the latency at inference time, it sacrifices some memory since each node's state is now expanded with a mailbox and it potentially uses outdated information at inference time due to asynchronous update of this mailbox. Importantly, this approach achieves low-latency by sacrificing up-to-date information at inference time. Indeed, the inference step is performed without access to the most recent embeddings because the expensive graph operations to compute the embeddings are performed asynchronously. Also towards reducing computational costs of GNNs, HashGNN [24] leverages MinHash to generate node embeddings suitable for the link prediction task, where nodes that results in the same hashed embedding are considered similar. SGSketch [27] is a streaming node embedding method which uses a mechanism to gradually forget outdated edges, achieving significant speedups. SGSketch uses the gradual forgetting strategy to update the adjacency matrix and therefore only considers the graph structure.

One possible solution is to decouple the inference from the expensive graph computations, like in APAN [22]. Performing the graph aggregations asynchronously results in inference using outdated information. However, in large data and high-frequency use-cases, e.g. transactional real-time data, there is a crucial need for low-latency solutions capable of processing a very high number, e.g. up to 1000, transactions per second. Moreover, it is desirable for these solutions to leverage the latest information available in order to enhance detection capabilities.

In short, the known approaches for graph representation learning are focused on either sampling k-hop neighborhoods, akin to breadth-first search, or random walks, akin to depth-first search. However, these methods are computationally expensive and unsuitable for real-time, low-latency inference on dynamic graphs.

These facts are disclosed in order to illustrate the technical problem addressed by the present disclosure.

## GENERAL DESCRIPTION

The present document discloses graph-sprints which is a general purpose feature extraction method for continuous-time-dynamic-graphs (CTDGs) that has low latency and is competitive with state-of-the-art, higher latency models. It is also disclosed a streaming, low latency approximation to the random-walk based features.

In an embodiment, time-aware node embeddings summarizing multi-hop information are computed using only single-hop operations on the incoming edges.

Herein the graph feature extraction method, computes node embeddings in the form of features that characterize a node's neighbourhood in dynamic graphs. Importantly, the proposed method is designed for low-latency settings while still using the most up-to-date information during the embedding calculations.

It was evaluated the proposed method on three open-source datasets and two in-house datasets, and compared with three state-of-the-art algorithms (TGN-attn, TGN-ID, Jodie). It was demonstrated that the graph-sprints features, combined with a machine learning classifier, achieve competitive performance (outperforming all baselines for the node classification tasks in five datasets). Simultaneously, graph-sprints significantly reduce inference latencies, achieving close to one order of magnitude speed-up in the experimental setting.

The graph-sprints method herein described, enables the computation of time-aware embeddings for CTDGs with minimal latency. It is shown that the graph-sprints features, when combined with a neural network classifier, achieve competitive predictive performance compared to state-of-the-art methods while having a significantly faster inference time, up to approximately one order of magnitude improvement. Interestingly, the present method performs more strongly on node classification tasks compared to the link prediction tasks.

It is disclosed a method for low-latency feature extraction using a continuous-time dynamic graph ("CTDG") from a data stream of transaction data, wherein each transaction is carried between a first node and a second node among a plurality of nodes, for obtaining a feature histogram for each node of at least a portion of said plurality of nodes, each feature histogram comprising a plurality of histogram bins for one or more features, each bin comprising a count of data values falling within each bin, the method comprising repeatedly carrying the following steps of:

> receiving a transaction data record from the data stream of the transaction data, the transaction data in the transaction data record pertaining to a transaction between the first node and the second node, wherein said transaction data comprises one or more transaction data values, and an identification of said first node and said second node;
>
> mapping at least a portion of the one or more transaction data values into a temporary histogram comprising the plurality of histogram bins for the one or more features, each bin comprising the count of transaction data values falling within each bin;
>
> obtaining a first weighted average histogram between the temporary histogram and the feature histogram of the second node using a first discount factor;
obtaining a second weighted average histogram between the histogram obtained in the previous step and the feature histogram of the first node using a second discount factor; storing the histogram obtained in the previous step as an updated feature histogram of the first node;
outputting the stored feature histogram of one or more nodes of said plurality of nodes, for feature extraction from the data stream of the transaction data.

In an embodiment, the method further comprises, after receiving said transaction data record and before outputting the stored feature histogram of one or more nodes of said plurality of nodes, the steps of:

mapping at least a portion of the one or more transaction data values into a temporary histogram comprising the plurality of histogram bins for one or more features, each bin comprising the count of transaction data values falling within each bin;
obtaining a first weighted average histogram between the temporary histogram and the feature histogram of the first node using a first discount factor;
obtaining a second weighted average histogram, between the histogram obtained in the previous step and the feature histogram of the second node using a second discount factor;
storing the histogram obtained in the previous step as an updated feature histogram of the second node.

In an embodiment, the method further comprises carrying out the steps for updating feature histogram of the first node in parallel with the steps for updating feature histogram of the second node.

In an embodiment, said transaction data further comprises one or more node data values pertaining to the first node, in particular said transaction data further comprises one or more node data values pertaining to the second node.

An embodiment comprises outputting the feature histogram of one or more nodes of said plurality of nodes to a machine learning model for obtaining node embeddings of the one or more nodes for training a machine-learning model.

An embodiment comprises outputting the feature histogram of one or more nodes of said plurality of nodes to a pretrained machine learning model comprising node embeddings of the one or more nodes for decision-making using said machine-learning model or a rule-based decision-making system.

In an embodiment, in the first weighted average histogram, the feature histogram of the second node is discounted by the first discount factor and the temporary histogram is discounted by a unit value deducted by the first discount factor.

In an embodiment, the first discount factor is a discount associated with node proximity.

In an embodiment, in the second weighted average histogram, the feature histogram of the first node is discounted by the second discount factor and the first weighted average histogram is discounted by a unit value deducted by the second discount factor.

In an embodiment, the second discount factor is a discount associated with a temporal retention, i.e. the opposite of a temporal decay factor.

In an embodiment, the first discount factor and the second discount factor are time-dependent functions, in particular functions dependent of the time difference between a current transaction data record involving the node for which a histogram is being updated and a previous transaction data record involving the same node for which a histogram is being updated.

In an embodiment, the first weighted average histogram and the second weighted average histogram, for obtaining the updated feature histogram of the first node, are calculated by: $\vec{s_0} \leftarrow \beta\vec{s_0} + (1 - \beta)\left((1 - \alpha)\overline{\delta}(f_0) + \alpha\vec{s_1}\right)$, where $\vec{s_0}$ is the feature histogram of the first node, $\vec{s_1}$ is the feature histogram of the second node, $f_0$ is the transaction data values, $\alpha$ is a first discount factor associated with node proximity, $\beta$ is a second discount factor associated with a temporal retention and $\overline{\delta}$ is a mapping function for mapping the transaction data values to the plurality of histogram bins.

An embodiment comprises normalizing the feature histogram of the first node by dividing the feature histogram of the first node by a factor such that the sum of all histogram bin values sums to 1.

An embodiment comprises hashing the temporary histogram using a hash function, before the weighted average histogram calculation, for obtaining a hashed temporary histogram comprising a hashed representation of the histogram bins of the temporary histogram, wherein the feature histogram of the first node and the feature histogram of the second node also comprise a hashed representation of the respective histogram bins by the same hash function.

In an embodiment, the hash function is a hash function preserved under averaging, i.e. the average of hashed histograms is the same as the hashing of averaged histograms.

In an embodiment, the hash function is an inner product between a vector of the histogram $\overrightarrow{s_{tot}^{t}}$ to be hashed and k random hyperplanes in $\mathbb{R}^M$ defined by unit vectors $\vec{h_j}$, j = 1, ... , k: $\theta_j^t = \vec{h_J} \cdot \vec{s_{tot}^t}$ , where k is the number of unit vectors, *t* is the number of histogram bins of the histogram to be hashed.

In an embodiment, at least one of the transaction data values is a monotonically increasing value, the method further comprising each time the transaction data record is received, filtering the monotonically increasing value by $d_u$ = $d_u$ exp(-$\Delta t/\tau_d$) + 1, where $d_u$ is the filtered monotonically increasing value pertaining to node u, $\Delta t$ is the time difference between the current transaction data record involving node u and the previous transaction data record involving node u, and $\tau_d$ is a timescale for filtering the monotonically increasing value, in particular the monotonically increasing value being node degree in a graph.

In an embodiment, the low-latency feature extraction using the CTDG from a data stream of transaction data is for obtaining a feature extraction approximating a random-walk based feature extraction from a graph obtained by the received transaction data records from the data stream of transaction data.

It is also disclosed a computer system comprising a computer processor, configured to carry out the method for low-latency feature extraction using a continuous-time dynamic graph from a data stream of transaction data, according to any of the disclosed methods.

It is also disclosed a computer program product embodied in a non-transitory, computer-readable medium comprising computer program instructions, which when executed by a computer processor, cause the computer processor to carry out any of the disclosed methods.

## BRIEF DESCRIPTION OF THE DRAWINGS

The following figures provide preferred embodiments for illustrating the disclosure and should not be seen as limiting the scope of invention.

**Figure 1:** Graphical representation overview of CTDGs current approaches.

**Figure 2:** Graphical representation of the AUC vs. runtime trade-off.

**Figure 3:** Schematic representation of embodiments of random-walks and graph-sprints.

**Figure 4:** Graphical representation of the speedup in comparison with the number of edges.

## DETAILED DESCRIPTION

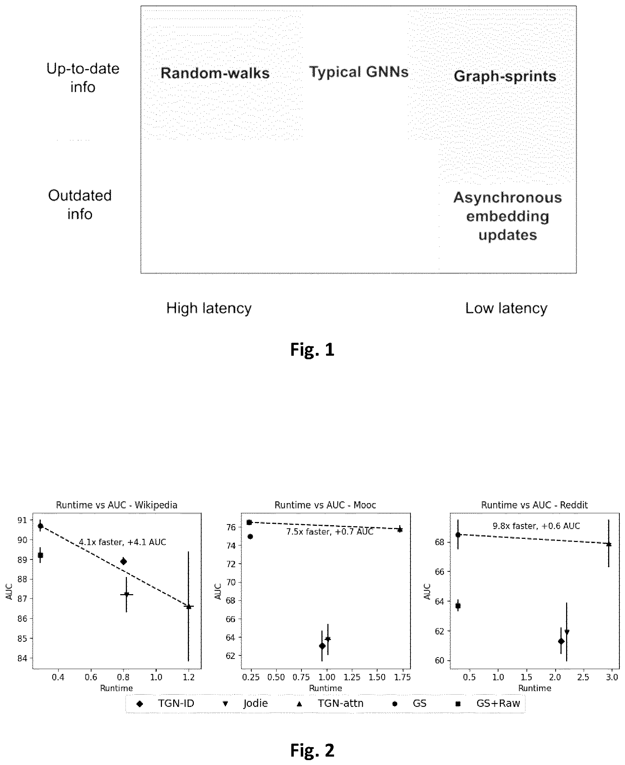

**Figure 1** shows a graphical representation overview of CTDGs current approaches. Current approaches either compute embeddings using real-time information but sacrificing latency, or compute low-latency embeddings but use outdated information in the computation. The proposed method, herein named graph-sprints, computes embeddings in low latency using real-time information.

The learned graph-sprints features can then be used in any downstream system, for example in a machine learning model or a rule-based system. It is shown how the proposed graph-sprints features, combined with a neural network classifier, are faster to run while not sacrificing in predictive performance compared with the higher-latency GNNs (Figure 2).

**Figure 2** shows a graphical trade-off representation of the AUC vs. runtime. The proposed methods based on graph-sprints (GS or GS-Raw), allow for low latency inference while outperforming state-of-the-art methods in terms of AUC on node classification tasks. X-axis represents time in seconds to process 200 batches of size 200, Y-axis represents test AUC. Error bars denote the standard deviation over 10 random seeds.

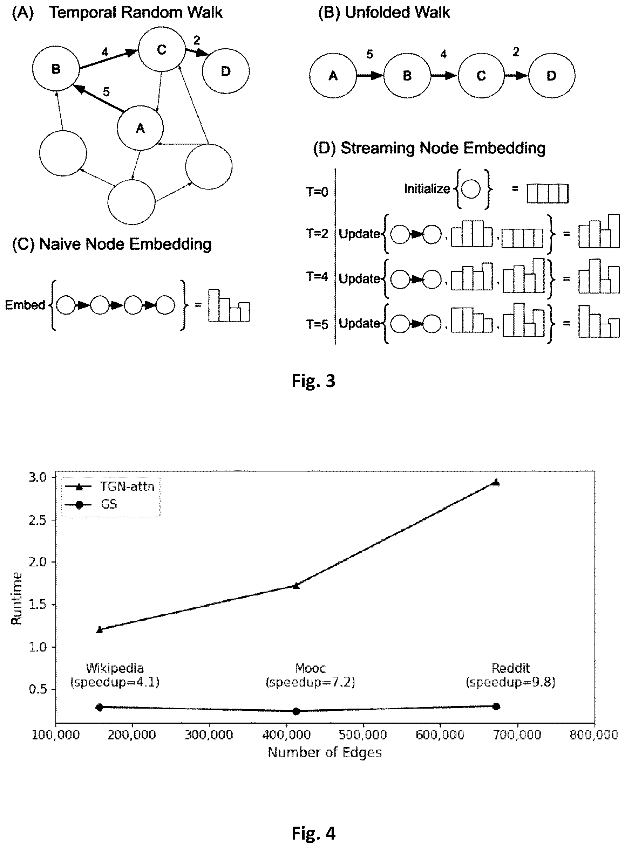

Figure **3** shows a schematic representation of embodiments of random-walks and graph-sprints. Edges have a timestamp feature (numbers) representing the time that a relationship was created. (A) A temporal random-walk is traversed from the most recent interaction A-B towards older interactions. (B) The same random-walk can be seen as a time-series of edges. (C) Based on a full temporal random-walk, one can compute embeddings by aggregating encountered feature values. (D) One can compute similar embeddings in a streaming setting, from only the new edge and the existing embeddings of the involved nodes.

For the approximations to be reliable, the following assumptions are made: the input graph is a CTDG with directed edges, edges have timestamps and the temporal walks respect time, in the sense that the next explored edge is older than the current edge. With these assumptions, one can unfold any directed temporal walk as a time-series (Figure 3A and 3B). Note that it either walks in the edge direction or opposite to it, as long as within a walk the same direction is always followed.

In an embodiment, the random-walks do not have a fixed number of hops, and instead consider infinite walks, on top of which it is computed embeddings.

The importance of older information compared to newer is controlled by a factor $\alpha$ between 0 and 1. A larger $\alpha$ gives more weight to features further away in the walk (or in the past), and one can therefore consider $\alpha$ the parameter that replaces the number of hops. The (1 - $\alpha$) factor is used to ensure the weights of the weighted average sum to 1.

Formally, let $\vec{s_i}$ be a histogram with $L$ bins, represented as an $L$-dimensional vector and characterizing the distribution of a feature $f$ in the neighborhood of node $i$. A full infinite walk starting at node 0 computes the histogram $\vec{s_0}$ as: , where $\Sigma$ is adding vectors, $\alpha$ is a discount, or fading, factor between 0 and 1, controlling the importance of distant information in the summary $\vec{s_0}$, and $i$ denotes the hops of the walk, $f_i$ is the feature value at node $i$ or edge $i$, and $\vec{\delta}(f_i)$ is an L-dimensional vector with element $\vec{\delta_j} = 1$ if the feature value $f_i$ falls within bin $j$ and $\vec{\delta_j} = 0$ for all other elements. Equation 1 then implements a streaming counts per bin, where older information is gradually forgotten. If the feature $f_i$ is a node feature, then the value is taken from the current node. If it is an edge feature, then the feature value is taken from the edge connecting the current node and the chosen neighbour.

In an embodiment $i = 0$ is the newest node, or in other words the seed node of the infinite walk.

In an embodiment, multiple summaries are computed per node, or one for each node, or edge feature of interest, and together they summarize a neighbourhood. The key idea is to approximate the infinite random-walks, i.e., the infinite sum of equation 1, by performing only a finite number of $k \geq 1$ hops, followed by choosing a random neighbor of the last encountered node and choosing an available summary $\vec{s_k}$ of that neighbour randomly, where $\vec{s_k}$ is defined as . With this strategy, one can approximate the summary $\vec{s_0}$ from equation 1 recurrently using . Compared with equation 1, one now truncates the sum after k terms.

Note that whenever the last histogram $\vec{s_k}$ is normalized such that the bins sum to 1, e.g. using a uniform initialization for terminal nodes, equation 3 guarantees that all subsequent histograms are normalized in the same way.

In an embodiment, for low-latency methods, the limit of $k = 1$ and Equation 3 becomes a streaming histogram: .

In an embodiment, the hyperparameter $\alpha$ depends on the number of hops or on time. When discounting by hops, this discount factor $\alpha$ is a fixed number between 0 and 1. When discounting by time, the factor is made dependent on the difference in edge timestamps, for example exponentially or hyperbolically. For example, $\alpha(t_k, t_{k-1}) = \exp(-|t_k - t_{k-1}|/\tau)$ for exponential, or

$$\alpha(t_k, t_{k-1}) = \frac{1}{1 + |t_k - t_{k-1}|/\tau}$$

for hyperbolic, wherein $\tau$ is a chosen timescale and $t_k$ is the timestamp of edge at hop k. Similarly, the resulting $\alpha$ will be a value between 0 and 1, and the bigger the time difference between the two edges the smaller $\alpha$ will be. Therefore, giving more importance to more recent connections.

In an embodiment, for increased efficiency, removing any stochasticity and updating a node's histogram at each edge arrival, combining the histograms of the two nodes involved in the arriving edge, as shown in equation 5: . In this way all the neighbours' information is implicitly combined using a moving average over time.

In an embodiment, hyperparameter $\beta$ is another discount factor between 0 and 1, controlling how much to focus on recent neighbor information in contrast to older information and which can optionally depend on time. In this way, one can update histograms in a fully streaming setting, using only information of each arriving edge. Nodes' summaries are initialized uniformly guaranteeing that the sum of all bins that belong to a certain edge is 1, e.g., if a feature has 10 bins then every bin is initialized with the value 0.1.

---

**Algorithm 1** Graph-sprints (eq. 5)

---

**Require:** *EdgeStream* {Stream of arriving edges $e_{i,j}$}
**Require:** $\mathcal{F}$ {Set of features for GS (e.g., node degree)}
    **for** $e_{v,u} \in$ *EdgeStream* **do**
        Get $\vec{s_u}, \vec{s_v}$ {Current summaries of nodes u,v}
        $\vec{s_v^\star} \leftarrow \alpha\vec{s_v}$ {Multiply all bins by $\alpha$}
        **for** $f \in \mathcal{F}$ **do**
            **if** value($f$) in bin j **then**
                $\vec{s_{vj}^\star} \leftarrow \vec{s_{vj}^\star} + (1 - \alpha)$ {Add (1-$\alpha$) to bin $j$}
            **end if**
        **end for**
        $\vec{s_u} \leftarrow \beta\vec{s_u} + (1 - \beta)\vec{s_v^\star}$ {Updated summary of node $u$.}
    **end for**

---

Algorithm corresponding to Equation 5

Compared to equation 4, one can observe that the remaining sampling over single-hop neighbors is abolished, at the cost of imposing a more strict dependence on time. The advantage of algorithm 1 is that no list of neighbors needs to be stored. Moreover, algorithm 1 can be applied in parallel to both the source node and the destination node, and therefore edges are not required to be directed.

In an embodiment, all neighbor summaries are aggregated using a weighted average, with weights that are biased by recency, and where the average is computed in a streaming fashion over time.

One special type of feature are the ones that have monotonically increasing values, exemplified by node degree features in a graph under conditions where edge deletion is non-existent.

In an embodiment, to avoid accumulating degrees over time, it is proposed to implement a streaming count of degrees per node. Every time an edge involving node $u$ arrives, it is computed: $d_u = d_u \, exp \, (-\Delta t / \tau_d) + 1$, where $d_u$ denotes either in- or out-degree of node u, $\Delta t$ denotes the time differences between the current edge involving node u and the previous one, and $\tau_d$ is a timescale for the streaming counts. This approach prevents values from growing too large and provides information about not only the structure but also the velocity and recency of edge additions.

In financial crime detection, for example, it is important to know if an account starts having more transactions than usual suddenly.

Relevant hyperparameters of this method are the choices of the boundaries of the histograms bins. In an embodiment, it is used one bin per category for categorical features. If the cardinality of a certain feature is too high, it is proposed to form bins using groups of categories.

In an embodiment, for numerical features, one plots the distribution in the training data and choose sensible bin edges, for example on every 10th percentile of the distribution. The method is not constrained by one choice of bins, as long as they can be updated in a streaming way.

The space complexity of the graph-sprints approach (algorithm 1) is $M = |\mathcal{V}| \sum_{f \in \mathcal{F}} L_f$ (7), where $|V|$ stands for the number of nodes, $L_f$ stands for the number of bins of the histogram for feature $f$, and $F$ stands for the set of features chosen to collect in histograms.

In an embodiment, the method further comprises reducing histogram size using similarity hashing for reducing memory.

Following the similarity hashing approach proposed in Jin et al. [8], we extend the method to the streaming setting.

In an embodiment, when all histograms are normalized (in the sense that bin values sum to 1), for concatenating them into one vector $\vec{s_{tot}}$, optionally defining a hash mapping by choosing $k$ random hyperplanes in $\mathbb{R}^M$ defined by unit vectors $\vec{h_j}$, $j = 1, \ldots , k$; where $\mathbb{R}^M$ is a space of dimension $M$.

The inner product between the histograms vector and the k unit vectors results in a vector of $k$ values, each value $\theta$ can be calculated using the dot product of the unit vector $\vec{h_j}$ and the histogram vector $\vec{s_{tot}}$, as illustrated in Equation 8. The superscript $t$ is used to denote the current time step.

$$\theta_j^t = \vec{h_j} \cdot \vec{s_{tot}^t} \; (8)$$

One can binarize the representation of the hashed vector using by taking the sign of the above $\theta_j^t$ .

Therefore, the resulting space complexity per node is $k$, replacing the number of bins in the memory $M$ by the number of hash vectors $k$.

Importantly, the hashed histograms can be updated without storing any of the original histograms. Combining equations 4 and equation 8 and denoting $\vec{\delta(f)}$ the concatenation of the $\vec{\delta}$ vectors for all collected features, one gets

$$\theta_j^{t+1} = \theta_j^t \cdot \alpha + \vec{h_j} \cdot \vec{\delta}(\vec{f}) \cdot (1 - \alpha)$$

Therefore, one can compute the next hash $\theta_j^{t+1}$ or $sign\left(\theta_j^{t+1}\right)$ directly from the previous $\theta_j^t$ and the new incoming features $\vec{\delta(f)}$. It is also important to note that this hashing scheme is preserved when averaging.

One can reduce the needed memory by relying on feature importance techniques. In an embodiment, a classifier is trained on the raw node and/or edge features and determine feature importances, after which only the top important features are used in the graph-sprints method. Or similarly train on all bins and decide the bins to be used based on their importance in the classification task. Thus, either reducing the number of features, or the number of bins within the features, or both.

The quality of the graph based features generated by the graph-sprints method was measured on two different tasks, namely, node classification and link prediction.

Three publicly available datasets from the social and education domains and two proprietary datasets from money laundering domain were used (see the main characteristics in Table 1 and Table 7, respectively). All datasets are CTDGs and are labelled. Each dataset is split into train, validation, and test sets respecting time (i.e., all events in the train are older than the events in validation, and all events in validation are older than the events in the test set).

It was used Optuna [1] to optimize the hyperparameters of all models, training 100 models using the TPE sampler and with 40 warmup trials. Each model trains using early stopping with a patience of 10 epochs, where the early stopping metric computed on the validation set as area under ROC curve (AUC) for node classification and average precision (AP) for link prediction. All models were trained using a batch size of 200 edges. Hyperparameter ranges used during optimization are reported in Table 2, and the optimized values are reported in Table 5.

Table 1: Information about public data [12]. We adopt the identical data partitioning strategy employed by the baseline methods we compare against, which also utilized these datasets.

|  | Wikipedia | Mooc | Reddit |
|---|---|---|---|
| #Nodes | 9,227 | 7,047 | 10,984 |
| #Edges | 157,474 | 411,749 | 672,447 |
| Label type | editing ban | student drop-out | posting ban |
| Positive labels | 0.14% | 0.98% | 0.05% |
| Used split | 75%-15%-15% | 60%-20%-20% | 75%-15%-15% |

As a first baseline, it was reproduced a state-of-the-art GNN model for CTDGs, the temporal-graph network (TGN) [16], which leverages a combination of memory modules and graph-based operators to obtain node representations.

It is noted, that the pytorch geometric [4] implementation of TGN was used, for which the sampling of neighbours uses a different strategy than the original TGN implementation. Indeed, the original paper allowed to sample from interactions within the same batch as long as they are older, while the pytorch geometric implementation does not allow within-batch information to be used.. As a consequence, the TGN results are not directly comparable with the originally published TGN performances. In any case, the graph-sprints embeddings were computed using the same batch size and therefore also do not have access to within-batch information, allowing a fair comparison between the algorithms.

Two variations of the TGN architecture were used. First, TGN-attn was implemented, which was the most powerful variation in the original paper but is expected to be slower due to the graph-attention operations. Second, TGN-ID was implemented, which is a variation of the TGN where no graph-embedding operators are used, and only the embedding resulting from the memory module is passed to the classification layers.

It was used as a third baseline the TGN implementation of Jodie [12], where instead of using Graph attention embeddings on top of the memory embedding, a time projection embedding module is used and where the loss function is otherwise identical to the TGN setting. For a fair comparison with TGN it was used the same memory updater module, namely, gated recurrent units (GRUs).

The TGN-ID and Jodie baselines do not require sampling of neighbours, and were therefore chosen as lower-latency baselines compared to TGN-attn.

For each arriving edge, it was applied the graph-sprints feature update (algorithm 1) to both the source node and the destination node in parallel. All edge features are used for the computation of the graph-sprints features, and for each feature bin edges are chosen as the 10 quantiles computed on the training data. Since the graph-sprints method only creates features, a classifier is implemented for the classification tasks. It was chosen to implement a neural network consisting of dense layers, normalization layers, and skip-connections across every two dense layers. Hyperparameter optimization proceeds in two steps. First, default parameters for the classifier are used to optimize the discount factors of the graph-sprints method, $\alpha$ and $\beta$. For this step, 50 models were trained. Subsequently, hyperparameter optimization of the classifier follows same approach as TGN, training 100 models.

In all experiments, the following three cases were tested. Firstly, the classifier was trained using only raw features (Raw). Then, the classifier was trained using only the graph-sprint features (GS). Finally, the classifier was trained using both raw and graph-sprint features (GS+Raw).

For the node classification task on the Wikipedia, Reddit and MOOC datasets, it was concatenated the source and destination node embeddings and feed the concatenated vector to the classifier, as is usual for these datasets since labels are on the edge level, for instance, in MOOC dataset where edges connect students to courses, labels indicating whether the student will drop-out are on the edge level.

For the link prediction task, all existing edges are considered positive edges, and negative edges are generated following the same approach as the original TGN paper [21], a negative edge is sampled for every positive one.

It was performed the link prediction task both in the transductive and inductive settings. In the transductive setting, negative edges are sampled on the same graph used for training. Conversely, in the inductive setting, the sampled negative edges are constrained to include at least one new node which was not used in the training graph.

**Table 2:** Hyperparameters ranges for the Graph-Sprints (GS) method and the other baselines (GNN).

| Method | Hyperparameter | min | max |
|---|---|---|---|
| GS | $\alpha$ | 0.1 | 1 |
| GS | $\beta$ | 0.1 | 1 |
| GNN/GS | Learning rate | 0.0001 | 0.01 |
| GNN/GS | Dropout perc | 0.1 | 0.3 |
| GNN/GS | Weight decay | 0.000000001 | 0.001 |
| GNN/GS | Num of dense layers | 1 | 3 |
| GNN/GS | Size of dense layer | 32 | 256 |
| GNN/GS | Batch size | 128 | 2024 |
| GNN | Memory size | 32 | 256 |
| GNN | Neighbors per node | 5 | 10 |
| GNN | Num GNN layers | 1 | 3 |
| GNN | Size GNN layer | 32 | 256 |

In Table 3 it is reported the average test AUC $\pm$ std for the Node classification task. The approach involved retraining the best model obtained after hyperparameter optimization, using 10 different random seeds. One can observe that on all datasets, the best model for node classification uses a variation of the graph-sprint method (either GS or GS+Raw). In table 4 it is reported the average test AUC $\pm$ std, along with the average precision (AP) $\pm$ std for the Link prediction task. Results were again computed after retraining the best model obtained through hyperparameter optimization, utilizing 10 distinct random seeds. One can observe that the graph-sprints model is the best for link prediction on the Mooc dataset, but performs poorly on the Wikipedia dataset. On the Reddit dataset, the graph-sprints model is first in the transductive setting, and second for the inductive setting.

**Table 3:** Results on Node classification task, it is reported the average test AUC $\pm$ std achieved by retraining the best model after hyperparameter optimization using 10 random seeds. The models, Raw, GS, and GS+Raw, use the same ML classifier but differ in the features employed for training. Raw uses raw edge features, GS uses graph-sprints histograms, and GS+Raw combines both.

| Method | AUC $\pm$ std | | |
|---|---|---|---|
| | Wikipedia | Mooc | Reddit |
| Raw | 58.5 $\pm$ 2.2 | 62.8 $\pm$ 0.9 | 55.3 $\pm$ 0.8 |
| TGN-ID | 88.9 $\pm$ 0.2 | 63.0 $\pm$ 17 | 61.3 $\pm$ 2.0 |
| Jodie | 87.2 $\pm$ 0.9 | 63.7 $\pm$ 16.7 | 61.9 $\pm$ 2.0 |
| TGN-attn | 86.6 $\pm$ 2.8 | 75.8 $\pm$ 0.4 | 67.9 $\pm$ 1.6 |
| GS | **90.7 $\pm$ 0.3** | 75.0 $\pm$ 0.2 | **68.5 $\pm$ 1.0** |
| GS+Raw | 89.2 $\pm$ 0.4 | **76.5 $\pm$ 0.3** | 63.7 $\pm$ 0.4 |

**Table 4:** Results on Link prediction task, it is reported test average AUC and average precision (AP) ± std resulting from retraining the best model after hyperparameter optimization using 10 random seeds. It is reported results on both Transductive (T) or Inductive (I) settings. The models, GS, and GS+Raw, use the same ML classifier but differ in the features employed for training. GS uses GS histograms, and GS+Raw combines GS histograms with raw edge features.

| | Method | Wiki | pedia | Mooc | | blackdit | |
|---|---|---|---|---|---|---|---|
| | | AUC | AP | AUC | AP | AUC | AP |
| T | TGN-ID | 95.6 ± 0.2 | 95.8 ± 0.1 | 80.4 ± 5.8 | 75.0 ± 6.1 | 94.7 ± 0.7 | 93.2 ± 1.0 |
| | Jodie | 94.3 ± 0.3 | 94.5 ± 0.3 | 85.1 ± 1.8 | 80.0 ± 3.5 | 94.9 ± 1.2 | 93.4 ± 1.7 |
| | TGN-attn | **97.0 ± 0.3** | **97.3 ± 0.3** | 80.3 ± 8.1 | 75.6 ± 8.4 | 96.1 ± 0.4 | 95.1 ± 0.7 |
| | GS | 92.5 ± 0.6 | 92.9 ± 0.7 | 82.7 ± 0.8 | 81.1 ± 0.7 | 96.1 ± 0.2 | 95.3 ± 0.3 |
| | GS+Raw | 92.1 ± 0.4 | 92.6 ± 0.4 | **85.4 ± 0.3** | **83.7 ± 0.3** | **96.8 ± 0.1** | **96.1 ± 0.2** |
| I | TGN-ID | 92.2 ± 0.2 | 92.8 ± 0.2 | 68.5 ± 8.6 | 63.5 ± 6.7 | 93.4 ± 0.6 | 92.2 ± 0.8 |
| | Jodie | 87.0 ± 0.6 | 89.1 ± 0.7 | 71.1 ± 2.2 | 66.1 ± 2.9 | 92.5 ± 1.3 | 90.8 ± 1.9 |
| | TGN-attn | **94.5 ± 0.2** | **95.0 ± 0.2** | 71.4 ± 4.1 | 66.9 ± 3.9 | **95.0 ± 0.4** | **94.3 ± 0.5** |
| | GS | 92.0 ± 0.3 | 91.7 ± 0.4 | 78.2 ± 0.6 | 76.5 ± 0.6 | 92.7 ± 0.5 | 92.7 ± 0.6 |
| | GS+Raw | 91.4 ± 0.2 | 91.1 ± 0.3 | **83.0 ± 0.5** | **80.3 ± 0.5** | 93.5 ± 0.4 | 92.2 ± 0.5 |

**Table 5:** Hyperparameters used in node classification (NC) and link prediction (LP). Learning rate and Weight decay are approximated due to space constraints.

| Task | Hyperparameter | Wikipedia | Mooc | Reddit |
|---|---|---|---|---|
| NC | $\alpha$ | 0.7 | 0.65 | 0.7 |
| | $\beta$ | 0.15 | 0.1 | 0.1 |
| | Learning rate | 0.0003 | 0.0001 | 0.0003 |
| | Dropout perc | 0.1 | 0.3 | 0.1 |
| | Weight decay | 1.1e-07 | 0.0005 | 1.1e-07 |
| | Num of dense layers | 12 | 4 | 4 |
| | Size of dense layer | 48 | 32 | 48 |
| | Batch size | 512 | 2048 | 512 |
| LP | $\alpha$ | 0.65 | 0.65 | 0.15 |
| | $\beta$ | 0.55 | 0.45 | 0.15 |
| | Learning rate | 4.9e-05 | 0.002 | 5.8e-05 |
| | Dropout perc | 0.2 | 0.3 | 0.2 |
| | Weight decay | 8.3e-06 | 3.5e-05 | 7.4e-07 |
| | Num of dense layers | 14 | 20 | 18 |
| | Size of dense layer | 64 | 64 | 48 |
| | Batch size | 1024 | 512 | 512 |

For comparing the latency of the method to baseline GNN architectures 200 batches of 200 events on the external datasets, Wikipedia, MOOC, and Reddit using the node classification task were run. It was computed the average time over 10 runs. Both models were running on Linux PC with 24 Intel Xeon CPU cores (3.70GHz) and a NVIDIA GeForce RTX 2080 Ti GPU (11GB). As depicted in Figure 2, the graph-sprints consistently outperforms other baselines (TGN-attn, TGN-ID, Jodie) in the node classification task while also demonstrating a significantly lower inference latency. Compared to TGN-attn, the GS achieves better classification results but is close to one order of magnitude faster (Figure 4).

To investigate the impact of graph size on runtime, Figure 4 showcases the observations. Notably, in the utilized datasets, TGN's runtime increases as the number of edges in the dataset grows, requiring more time to score 200 batches. Conversely, since GS does not require neighbourhood sampling, it exhibits constant inference time regardless of the graph size. Furthermore, the speedups achieved by graph-sprints are expected to be significantly higher in a big-data context, where the data is stored in a distributed manner rather than in memory as in the current experiments. In such scenarios, graph operations used in graph-neural networks like TGN-attn would incur even higher computational costs.

Figure 4 shows a graphical representation of the speedup in comparison with the number of edges. The speedups increase almost linearly with the number of edges in the graph.

Both the Wikipedia and Reddit datasets consist of 172 edge features. By calculating graph-sprints with 10 quantiles per feature, along with incorporating in/out degrees histograms and time-difference histograms, it is obtained a node embedding of 1742 features (one feature per histogram bin). In the experimental setup, similar to state-of-the-art approaches, it is concatenated the source and destination node embeddings for source label prediction, resulting in a 3484-feature vector. To reduce the size of the node embeddings, it is proposed a similarity hashing-based memory reduction technique. The experiments, as presented in Table 6, demonstrate that the technique significantly reduces storage requirements sacrificing the AUC in the node classification task. In the Reddit dataset, storage can be reduced to 50% with a 0.6% AUC sacrifice or to 10% with a 2% AUC sacrifice. The reduction percentage can be fine-tuned as a hyperparameter, considering the use case and dataset, to strike a balance between precision and memory trade-off.

Remarkably, in the Wikipedia dataset, a reduction in storage to a mere 0.12% of the original features (by projecting the initial vector onto a four-dimensional vector) can be achieved without deteriorating the AUC score. In order to validate this surprising result, the distributions of the projected features conditioned on the node label were taken into consideration and indeed it was observed that two features show a very clear ability to distinguish the two classes, confirming that in this dataset, the large compression does not harm classification performance.

**Table 6:** Effect of memory reduction on the node classification task. It is reported average test AUC $\pm$ std resulting from retraining the best model, after optimization, using 10 random seeds. Only the GS embeddings are used to train the classifier. Since MOOC has less features it was added '-' where number of features < 1.

| Space used | Wikipedia | Mooc | Reddit |
|---|---|---|---|
| 100% | 90.7 $\pm$ 0.3 | 75.0 $\pm$ 0.2 | 68.5 $\pm$ 1.0 |
| 50% | 90.8 $\pm$ 0.1 | 75.0 $\pm$ 0.1 | 67.9 $\pm$ 1.1 |
| 25% | 91.1 $\pm$ 0.1 | 74.9 $\pm$ 0.3 | 65.1 $\pm$ 1.9 |
| 10% | 90.9 $\pm$ 0.2 | 74.0 $\pm$ 0.3 | 66.5 $\pm$ 0.9 |
| 0.5% | 89.7 $\pm$ 0.3 | - | 58.0 $\pm$ 2.6 |
| 0.12% | 86.4 $\pm$ 0.3 | - | 55.2 $\pm$ 1.1 |

For example, in money laundering, the criminals' objective is to hide the illegal source of their money by moving funds between various accounts and financial institutions. In these experiments, the objective is to enrich a classifier with graph-based features generated by the graph-sprints method.

It was evaluated the graph-sprints method in the AML domain using two real-world banking datasets. Due to privacy concerns, one can not disclose the identity of the financial institutions (Fls) nor provide exact details regarding the node features. The datasets are referred as FI-A and FI-B. The graphs in this use-case are constructed by considering the accounts as nodes and the money transfers between accounts as edges. Table 7 shows approximate details of these datasets.

As before, it was trained the neural network classifier that uses raw node features only, i.e., no graph information is present (Raw). It was compared that baseline performance against models that include only graph-sprint features (GS), and models that use both graph-sprints features and raw features (GS+Raw). Finally, it was trained the same GNN architectures as in the public datasets (TGN-ID, Jodie, and TGN-attn).

**Table 7:** Information about AML datasets.

|  | **FI-A** | **FI-B** |
|---|---|---|
| #Nodes | ≈400000 | ≈10000 |
| #Edges | ≈500000 | ≈2000000 |
| Positive labels | 2-5% | 20-40% |
| Duration | ≈300 days | ≈600 days |
| Edges/day (mean ± std) | 1500 ± 750 | 3000 ± 5000 |
| Used split | 60%-10%-30% | 60%-10%-30% |

Due to privacy considerations, one are unable to disclose the actual obtained AUC values. Instead, we present the relative improvements in AUC ($\varDelta AUC$) when compared to a baseline model that does not utilize graph features. In this context, the baseline model corresponds to a $\varDelta AUC$ value of 0, and any increase in recall compared to the baselines is represented by positive values of $\varDelta AUC$.

Table 8 displays the $\varDelta AUC$ values for the GS variations and other state-of-the-art baselines. The GS variations exhibit the most favourable outcomes in both datasets, with an approximate 3.3% improvement in AUC for the FI-A dataset and a 27.8% improvement in AUC for the FI-B dataset.

**Table 8:** Node classification results in AML data. It is reported relative gain in AUC ($\varDelta AUC$) compared to a baseline model that does not utilize graph features. It is reported the average test $\varDelta AUC$ ± std achieved by retraining the best model after hyperparameter optimization using 10 random seeds. We identify the best model (GS+Raw/GS) and highlight the second best model (GS/TGN-attn).

| **Method** | **$\varDelta$AUC ± std** | |
|---|---|---|
|  | **FI-A** | **FI-B** |
| TGN-ID | +0.1 ± 0.1 | +24.4 ± 0.2 |
| Jodie | +0.0 ± 0.1 | +24.5 ± 0.2 |
| TGN-attn | +0.3 ± 0.7 | +25.1 ± 0.3 |
| GS | +1.8 ± 0.5 | **+27.8 ± 0.4** |
| GS+Raw | **+3.3 ± 0.3** | +20.1 ± 3.9 |

Flow diagrams of particular embodiments of the presently disclosed methods are depicted in figures. The flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The present disclosure is also particularly apt for execution on a GPU - graphics processing unit (a specialized processor explicitly designed for executing graphical algorithms), NPU - neural processing unit (a specialized processor explicitly designed for executing machine learning algorithms), or any other inherently parallel processing unit.

The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

References

[1] Takuya Akiba, Shotaro Sano, Toshihiko Yanase, Takeru Ohta, and Masanori Koyama. 2019. Optuna: A next-generation hyperparameter optimization method. In Proceedings of the 25th ACM SIGKDD international conference on knowledge discovery & data mining. 2623-2631.

[2] Hanjun Dai, Yichen Wang, Rakshit Trivedi, and Le Song. 2016. Deep coevolutionary network: Embedding user and item features for recommendation. arXiv preprint arXiv:1609.03675 (2016).

[3] Wenqi Fan, Yao Ma, Qing Li, Yuan He, Eric Zhao, Jiliang Tang, and Dawei Yin. 2019. Graph neural networks for social recommendation. In The world wide web conference. 417-426.

[4] Matthias Fey and Jan E. Lenssen. 2019. Fast Graph Representation Learning with PyTorch Geometric. In ICLR Workshop on Representation Learning on Graphs and Manifolds.

[5] Palash Goyal, Nitin Kamra, Xinran He, and Yan Liu. 2018. Dyngem: Deep embedding method for dynamic graphs. arXiv preprint arXiv:1805.11273 (2018).

[6] Aditya Grover and Jure Leskovec. 2016. node2vec: Scalable feature learning for networks. In Proceedings of the 22nd ACM SIGKDD international conference on Knowledge discovery and data mining. 855-864.

[7] Jin Guo, Zhen Han, Zhou Su, Jiliang Li, Volker Tresp, and Yuyi Wang. 2022. Continuous Temporal Graph Networks for Event-Based Graph Data. arXiv preprint arXiv:2205.15924 (2022).

[8] Di Jin, Mark Heimann, Ryan A Rossi, and Danai Koutra. 2019. Node2bits: Compact time-and attribute-aware node representations for user stitching. In Joint European Conference on Machine Learning and Knowledge Discovery in Databases. Springer, 483-506.

[9] Di Jin, Sungchul Kim, Ryan A Rossi, and Danai Koutra. 2020. From static to dynamic node embeddings. arXiv preprint arXiv:2009.10017 (2020).

[10] Di Jin, Sungchul Kim, Ryan A Rossi, and Danai Koutra. 2022. On Generalizing Static Node Embedding to Dynamic Settings. In Proceedings of the Fifteenth ACM International Conference on Web Search and Data Mining. 410-420.

[11] Ming Jin, Yuan-Fang Li, and Shirui Pan. 2022. Neural Temporal Walks: Motif-Aware Representation Learning on Continuous-Time Dynamic Graphs. In Advances in Neural Information Processing Systems.

[12] Srijan Kumar, Xikun Zhang, and Jure Leskovec. 2019. Predicting Dynamic Embedding Trajectory in Temporal interaction Networks. In Proceedings of the 25th ACM SIGKDD international conference on Knowledge discovery and data mining. ACM.

[13] John Boaz Lee, Giang Nguyen, Ryan A Rossi, Nesreen K Ahmed, Eunyee Koh, and Sungchul Kim. 2020. Dynamic node embeddings from edge streams. IEEE Transactions on Emerging Topics in Computational Intelligence 5, 6 (2020), 931-946.

[14] Giang Hoang Nguyen, John Boaz Lee, Ryan A Rossi, Nesreen K Ahmed, Eunyee Koh, and Sungchul Kim. 2018. Continuous-time dynamic network embeddings. In Companion proceedings of the the web conference 2018. 969-976.

[15] Bryan Perozzi, Rami Al-Rfou, and Steven Skiena. 2014. Deepwalk: Online learning of social representations. In Proceedings of the 20th ACM SIGKDD international conference on Knowledge discovery and data mining. 701-710.

[16] Emanuele Rossi, Ben Chamberlain, Fabrizio Frasca, Davide Eynard, Federico Monti, and Michael Bronstein. 2020. Temporal Graph Networks for Deep Learning on Dynamic Graphs. In ICML 2020 Workshop on Graph Representation Learning.

[17] Hooman Peiro Sajjad, Andrew Docherty, and Yuriy Tyshetskiy. 2019. Efficient representation learning using random walks for dynamic graphs. arXiv preprint arXiv:1901.01346 (2019).

[18] Aravind Sankar, Yanhong Wu, Liang Gou, Wei Zhang, and Hao Yang. 2020. Dysat: Deep neural representation learning on dynamic graphs via self-attention networks. In Proceedings of the 13th international conference on web search and data mining. 519-527.

[19] Amauri Souza, Diego Mesquita, Samuel Kaski, and Vikas Garg. 2022. Provably expressive temporal graph networks. Advances in Neural Information Processing Systems 35 (2022), 32257-32269.

[20] Jianian Wang, Sheng Zhang, Yanghua Xiao, and Rui Song. 2021. A review on graph neural network methods in financial applications. arXiv preprint arXiv:2111.15367 (2021).

[21] Lili Wang, Chenghan Huang, Weicheng Ma, Ruibo Liu, and Soroush Vosoughi. 2021. Hyperbolic node embedding for temporal networks. Data Mining and Knowledge Discovery 35, 5 (2021), 1906-1940.

[22] Xuhong Wang, Ding Lyu, Mengjian Li, Yang Xia, Qi Yang, Xinwen Wang, Xinguang Wang, Ping Cui, Yupu Yang, Bowen Sun, et al. 2021. Apan: Asynchronous propagation attention network for real-time temporal graph embedding. In Proceedings of the 2021 international conference on management of data. 2628-2638.

[23] Yanbang Wang, Yen-Yu Chang, Yunyu Liu, Jure Leskovec, and Pan Li. 2021. Inductive representation learning in temporal networks via causal anonymous walks. arXiv preprint arXiv:2101.05974 (2021).

[24] Wei Wu, Bin Li, Chuan Luo, and Wolfgang Nejdl. 2021. Hashing-accelerated graph neural networks for link prediction. In Proceedings of the Web Conference 2021. 2910-2920.

[25] Zonghan Wu, Shirui Pan, Fengwen Chen, Guodong Long, Chengqi Zhang, and S Yu Philip. 2020. A comprehensive survey on graph neural networks. IEEE transactions on neural networks and learning systems 32, 1 (2020), 4-24.

[26] Da Xu, Chuanwei Ruan, Evren Korpeoglu, Sushant Kumar, and Kannan Achan. 2020. Inductive representation learning on temporal graphs. arXiv preprint arXiv:2002.07962 (2020).

[27] Dingqi Yang, Bingqing Qu, Jie Yang, Liang Wang, and Philippe Cudre-Mauroux. 2022. Streaming graph embeddings via incremental neighborhood sketching. IEEE Transactions on Knowledge and Data Engineering 35, 5 (2022), 5296-5310.

[28] Jiaxuan You, Tianyu Du, and Jure Leskovec. 2022. ROLAND: graph learning framework for dynamic graphs. In Proceedings of the 28th ACM SIGKDD Conference on Knowledge Discovery and Data Mining. 2358-2366.

[29] Xiao-Meng Zhang, Li Liang, Lin Liu, and Ming-Jing Tang. 2021. Graph neural networks and their current applications in bioinformatics. Frontiers in genetics 12 (2021), 690049.

**Claims**

1. A method for low-latency feature extraction using a continuous-time dynamic graph ("CTDG") from a data stream of transaction data, wherein each transaction is carried between a first node and a second node among a plurality of nodes, for obtaining a feature histogram for each node of at least a portion of said plurality of nodes, each feature histogram comprising a plurality of histogram bins for one or more features, each bin comprising a count of data values falling within each bin, the method comprising repeatedly carrying the following steps of:

receiving a transaction data record from the data stream of the transaction data, the transaction data in the transaction data record pertaining to a transaction between the first node and the second node, wherein said transaction data comprises one or more transaction data values, and an identification of said first node and said second node;

mapping at least a portion of the one or more transaction data values into a temporary histogram comprising the plurality of histogram bins for the one or more features, each bin comprising the count of transaction data values falling within each bin;

obtaining a first weighted average histogram between the temporary histogram and the feature histogram of the second node using a first discount factor;

obtaining a second weighted average histogram between the histogram obtained in the previous step and the feature histogram of the first node using a second discount factor;

storing the histogram obtained in the previous step as an updated feature histogram of the first node;

outputting the stored feature histogram of one or more nodes of said plurality of nodes, for feature extraction from the data stream of the transaction data.

2. The method according to the previous claim further comprising, after receiving said transaction data record and before outputting the stored feature histogram of one or more nodes of said plurality of nodes, the steps of:

mapping at least a portion of the one or more transaction data values into a temporary histogram comprising the plurality of histogram bins for one or more features, each bin comprising the count of transaction data values falling within each bin;

obtaining a first weighted average histogram between the temporary histogram and the feature histogram of the first node using a first discount factor;

obtaining a second weighted average histogram, between the histogram obtained in the previous step and the feature histogram of the second node using a second discount factor;

storing the histogram obtained in the previous step as an updated feature histogram of the second node.

3. The method according to claim 1 and claim 2, comprising carrying out the steps of claim 2 in parallel with the steps of claim 1.

4. The method according to any of the previous claims wherein said transaction data further comprises one or more node data values pertaining to the first node, in particular said transaction data further comprises one or more node data values pertaining to the second node.

5. The method according to any of the previous claims comprising outputting the feature histogram of one or more nodes of said plurality of nodes to a machine learning model for obtaining node embeddings of the one or more nodes for training a machine-learning model, and/or

comprising outputting the feature histogram of one or more nodes of said plurality of nodes to a pretrained machine learning model comprising node embeddings of the one or more nodes for decision-making using a machine-learning model or a rule-based decision-making system.

6. The method according to any of the previous claims wherein, in the first weighted average histogram, the feature histogram of the second node is discounted by the first discount factor and the temporary histogram is discounted by a unit value deducted by the first discount factor, in particular wherein the first discount factor is a discount associated with node proximity.

7. The method according to any of the previous claims wherein, in the second weighted average histogram, the feature histogram of the first node is discounted by the second discount factor and the first weighted average histogram is discounted by a unit value deducted by the second discount factor, in particular wherein the second discount factor is a discount associated with a temporal retention.

8. The method according to any of the previous claims, wherein the first discount factor and the second discount factor are time-dependent functions, in particular functions dependent of the time difference between a current transaction data record involving the node for which a histogram is being updated and a previous transaction data record involving the same node for which a histogram is being updated.

9. The method according to any of the previous claims wherein the first weighted average histogram and the second weighted average histogram, for obtaining the updated feature histogram of the first node, are calculated by:

$$\vec{s_0} \leftarrow \beta\vec{s_0} + (1-\beta)\left((1-\alpha)\vec{\delta}(f_0) + \alpha\vec{s_1}\right),$$

where $\vec{s_0}$ is the feature histogram of the first node, $\vec{s_1}$ is the feature histogram of the second node, $f_0$ is the transaction data values, $\alpha$ is a first discount factor associated with node proximity, $\beta$ is a second discount factor associated with a temporal retention and $\vec{\delta}$ is a mapping function for mapping the transaction data values to the plurality of histogram bins.

10. The method according to any of the previous claims further comprising hashing the temporary histogram using a hash function, before the weighted average histogram calculation, for obtaining a hashed temporary histogram comprising a hashed representation of the histogram bins of the temporary histogram, wherein the feature histogram of the first node and the feature histogram of the second node also comprise a hashed representation of the respective histogram bins by the same hash function, in particular wherein the hash function is an hash function which is preserved under averaging.

11. The method according to the previous claim wherein the hash function is an inner product between a vector of the histogram $\vec{s_{tot}^t}$ to be hashed and k random hyperplanes in $\mathbb{R}^M$ defined by unit vectors $\vec{h_j}$, $j = 1, \ldots, k$:

$$\theta_j^t = \vec{h_j} \cdot \vec{s_{tot}^t}$$

where k is the number of unit vectors, $t$ is the number of histogram bins of the histogram to be hashed.

12. The method according to any of the previous claims wherein at least one of the transaction data values is a monotonically increasing value, the method further comprising each time the transaction data record is received, filtering the monotonically increasing value by $d_u = d_u \exp(-\Delta t/\tau_d) + 1$, where $d_u$ is the filtered monotonically increasing value pertaining to node u, $\Delta t$ is the time difference between the current transaction data record involving node u and the previous transaction data record involving node u, and $\tau_d$ is a timescale for filtering the monotonically increasing value, in particular the monotonically increasing value being node degree in a graph.

13. The method according to any of the previous claims wherein the low-latency feature extraction using the CTDG from a data stream of transaction data is for obtaining a feature extraction approximating a random-walk based feature extraction from a graph obtained by the received transaction data records from the data stream of transaction data.

14. A computer system comprising a computer processor, configured to carry out the method for low-latency feature extraction using a continuous-time dynamic graph from a data stream of transaction data for training a machine learning model, according to the method of any of the claims 1-13.

15. A computer program product embodied in a non-transitory, computer-readable medium comprising computer program instructions, which when executed by a computer processor, cause the computer processor to carry out the method of any of the claims 1-13.

**Fig. 1**

**Fig. 2**

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAKUYA AKIBA ; SHOTARO SANO ; TOSHIHIKO YANASE ; TAKERU OHTA ; MASANORI KOYA-MA.** Optuna: A next-generation hyperparameter optimization method. *Proceedings of the 25th ACM SIGKDD international conference on knowledge discovery & data mining,* 2019, 2623-2631
- **HANJUN DAI ; YICHEN WANG ; RAKSHIT TRIVEDI ; LE SONG.** Deep coevolutionary network: Embedding user and item features for recommendation. *arXiv preprint arXiv:1609.03675,* 2016
- **WENQI FAN ; YAO MA ; QING LI ; YUAN HE ; ERIC ZHAO ; JILIANG TANG ; DAWEI YIN.** Graph neural networks for social recommendation. *The world wide web conference,* 2019, 417-426
- **MATTHIAS FEY ; JAN E. LENSSEN.** Fast Graph Representation Learning with PyTorch Geometric. *ICLR Workshop on Representation Learning on Graphs and Manifolds,* 2019
- **PALASH GOYAL ; NITIN KAMRA ; XINRAN HE ; YAN LIU.** Dyngem: Deep embedding method for dynamic graphs. *arXiv preprint arXiv:1805.11273,* 2018
- **ADITYA GROVER ; JURE LESKOVEC.** node2vec: Scalable feature learning for networks. *Proceedings of the 22nd ACM SIGKDD international conference on Knowledge discovery and data mining,* 2016, 855-864
- **JIN GUO ; ZHEN HAN ; ZHOU SU ; JILIANG LI ; VOLKER TRESP ; YUYI WANG.** Continuous Temporal Graph Networks for Event-Based Graph Data. *arXiv preprint arXiv:2205.15924,* 2022
- Node2bits: Compact time-and attribute-aware node representations for user stitching. **DI JIN ; MARK HEIMANN ; RYAN A ROSSI ; DANAI KOUTRA.** Joint European Conference on Machine Learning and Knowledge Discovery in Databases. Springer, 2019, 483-506
- **DI JIN ; SUNGCHUL KIM ; RYAN A ROSSI ; DANAI KOUTRA.** From static to dynamic node embeddings. *arXiv preprint arXiv:2009.10017,* 2020
- **DI JIN ; SUNGCHUL KIM ; RYAN A ROSSI ; DANAI KOUTRA.** On Generalizing Static Node Embedding to Dynamic Settings. *Proceedings of the Fifteenth ACM International Conference on Web Search and Data Mining,* 2022, 410-420
- **MING JIN ; YUAN-FANG LI ; SHIRUI PAN.** Neural Temporal Walks: Motif-Aware Representation Learning on Continuous-Time Dynamic Graphs. *Advances in Neural Information Processing Systems,* 2022
- Predicting Dynamic Embedding Trajectory in Temporal interaction Networks. **SRIJAN KUMAR ; XIKUN ZHANG ; JURE LESKOVEC.** Proceedings of the 25th ACM SIGKDD international conference on Knowledge discovery and data mining. ACM, 2019
- **JOHN BOAZ LEE ; GIANG NGUYEN ; RYAN A ROSSI ; NESREEN K AHMED ; EUNYEE KOH ; SUNGCHUL KIM.** Dynamic node embeddings from edge streams. *IEEE Transactions on Emerging Topics in Computational Intelligence,* 2020, vol. 5 (6), 931-946
- **GIANG HOANG NGUYEN ; JOHN BOAZ LEE ; RYAN A ROSSI ; NESREEN K AHMED ; EUNYEE KOH ; SUNGCHUL KIM.** Continuous-time dynamic network embeddings. *Companion proceedings of the the web conference 2018,* 2018, 969-976
- **BRYAN PEROZZI ; RAMI AL-RFOU ; STEVEN SKIENA.** Deepwalk: Online learning of social representations. *Proceedings of the 20th ACM SIGKDD international conference on Knowledge discovery and data mining,* 2014, 701-710
- **EMANUELE ROSSI ; BEN CHAMBERLAIN ; FABRIZIO FRASCA ; DAVIDE EYNARD ; FEDERICO MONTI ; MICHAEL BRONSTEIN.** Temporal Graph Networks for Deep Learning on Dynamic Graphs. *ICML 2020 Workshop on Graph Representation Learning,* 2020
- **HOOMAN PEIRO SAJJAD ; ANDREW DOCHERTY ; YURIY TYSHETSKIY.** Efficient representation learning using random walks for dynamic graphs. *arXiv preprint arXiv:1901.01346,* 2019
- **ARAVIND SANKAR ; YANHONG WU ; LIANG GOU ; WEI ZHANG ; HAO YANG.** Dysat: Deep neural representation learning on dynamic graphs via self-attention networks. *Proceedings of the 13th international conference on web search and data mining,* 2020, 519-527
- **AMAURI SOUZA ; DIEGO MESQUITA ; SAMUEL KASKI ; VIKAS GARG.** Provably expressive temporal graph networks. *Advances in Neural Information Processing Systems,* 2022, vol. 35, 32257-32269

- **JIANIAN WANG ; SHENG ZHANG ; YANGHUA XIAO ; RUI SONG.** A review on graph neural network methods in financial applications. *arXiv preprint arXiv:2111.15367,* 2021
- **LILI WANG ; CHENGHAN HUANG ; WEICHENG MA ; RUIBO LIU ; SOROUSH VOSOUGHI.** Hyperbolic node embedding for temporal networks. *Data Mining and Knowledge Discovery,* 2021, vol. 35 (5), 1906-1940
- **XUHONG WANG ; DING LYU ; MENGJIAN LI ; YANG XIA ; QI YANG ; XINWEN WANG ; XINGUANG WANG ; PING CUI ; YUPU YANG ; BOWEN SUN et al.** Apan: Asynchronous propagation attention network for real-time temporal graph embedding. *Proceedings of the 2021 international conference on management of data,* 2021, 2628-2638
- **YANBANG WANG ; YEN-YU CHANG ; YUNYU LIU ; JURE LESKOVEC ; PAN LI.** Inductive representation learning in temporal networks via causal anonymous walks. *arXiv preprint arXiv:2101.05974,* 2021
- **WEI WU ; BIN LI ; CHUAN LUO ; WOLFGANG NEJDL.** Hashing-accelerated graph neural networks for link prediction. *Proceedings of the Web Conference 2021,* 2021, 2910-2920
- **ZONGHAN WU ; SHIRUI PAN ; FENGWEN CHEN ; GUODONG LONG ; CHENGQI ZHANG ; S YU PHILIP.** A comprehensive survey on graph neural networks. *IEEE transactions on neural networks and learning systems,* 2020, vol. 32 (1), 4-24
- **DA XU ; CHUANWEI RUAN ; EVREN KORPEOGLU ; SUSHANT KUMAR ; KANNAN ACHAN.** Inductive representation learning on temporal graphs. *arXiv preprint arXiv:2002.07962,* 2020
- **DINGQI YANG ; BINGQING QU ; JIE YANG ; LIANG WANG ; PHILIPPE CUDRE-MAUROUX.** Streaming graph embeddings via incremental neighborhood sketching. *IEEE Transactions on Knowledge and Data Engineering,* 2022, vol. 35 (5), 5296-5310
- **JIAXUAN YOU ; TIANYU DU ; JURE LESKOVEC.** ROLAND: graph learning framework for dynamic graphs. *Proceedings of the 28th ACM SIGKDD Conference on Knowledge Discovery and Data Mining,* 2022, 2358-2366
- **XIAO-MENG ZHANG ; LI LIANG ; LIN LIU ; MING-JING TANG.** Graph neural networks and their current applications in bioinformatics. *Frontiers in genetics,* 2021, vol. 12, 690049